# EUROPÄISCHE PATENTANMELDUNG

(11) **EP 0 534 375 A2**
(43) Veröffentlichungstag der Anmeldung: **31.03.1993**
(21) Anmeldenummer: 92116216.0
(22) Anmeldetag: 23.09.1992
(51) Int. Cl.: B60J 10/08, B60J 10/04, E06B 7/23

(54) **Schiebetür oder -fenster mit Führungsprofilleiste**

(30) Priorität: 25.09.1991 DE 9111947 U
(71) Anmelder: SPIER GmbH, D-32839 Steinheim (DE)
(72) Erfinder: Hagedorn, Herbert, W-4934 Horn-Bad Meinberg (DE)
(74) Vertreter: Hanewinkel, Lorenz, Dipl.-Phys.

(57) **Zusammenfassung**

Die Führungsprofilleiste (1) nimmt ein formschlüssig verschiebliches Nutprofil (10) auf und ist insbesondere als Schiebeführung einer Schiebetür oder eines Schiebefensters in einem Fahrzeug vorgesehen.

Die Führungsprofilleiste (1) besteht aus elastischem Gummi und ist im Querschnitt von einer befestigungsseitigen Basis (B) aus verjüngt ausgeführt. Von dem verjüngten Bereich aus estreckt sich seitlich schräg zurück gerichtet mindestens eine Dichtlippe (3) mit einem dazwischenliegenden Freiraum (5); mit dieser Dichtlippe (3) greift die Leiste (1) in dem Nutprofil (10) elastisch und kraftschlüssig ein.

## Beschreibung

Die Erfindung betrifft eine Führungsprofilleiste, auf der ein Nutprofil formschlüssig verschieblich gehalten ist, insbesondere als Schiebeführung einer Schiebetür oder eines Schiebefensters in einem Fahrzeug.

Es ist bekannt, Schiebetüren und -fenster in einer Nut-Federverbindung verschieblich zu halten. Dabei besteht die Schwierigkeit, daß die Passung zwischen der Nut und der Feder relativ eng und schwergängig ist oder weit ist und zu Klappgeräuschen neigt. Außerdem ist eine lose Passung notwendig, wenn insbesondere bei Türen mit einer Verschmutzung und/oder einer Vereisung zu rechnen ist. Insbesondere bei Fahrzeugen ist die Entstehung von Klappergeräuschen beim Fahren unvermeidlich.

Es ist Aufgabe der Erfindung, eine Nut-Feder-Schiebeführung, insbesondere eine Bodenführung für Kraftfahrzeugtüren, zu offenbaren, die ein leichtes Schieben bei spielfreier Dichtung und gutem Halt erbringt.

Die Lösung der Aufgabe besteht darin, daß die Führungsprofilleiste aus elastischem Gummi besteht und sich von einer befestigungsseitigen Basis aus verjüngt erstreckt und daß von dem verjüngten Bereich aus sich seitlich schräg zurückgerichtet mindestens eine Dichtlippe mit einem dazwischenliegenden Freiraum erstreckt, so daß sie im Nutprofil elastisch kraftschlüssig anliegt.

Vorteilhafte Ausgestaltungen sind in den Unteransprüchen angegeben.

Die neuartige Feder besteht aus einem quasi endlosen Profilstrang aus Natur- oder Kunstgummi, der auf Maß geschnitten tür- oder bodenseitig mit seiner Basis zu befestigen ist, und mindestens einseitig eine freistehende, die Basis seitlich überragende und schräg neben die Basis geneigte elastische Dichtlippe aufweist, wobei das Profil mit der oder den Dichtlippen in der andererseits angeordneten Nut Aufnahme findet und die elastische Dichtlippe einen kraft- und formschlüssigen seitlichen Querhalt darin gibt, jedoch eine seitliche Längsverschiebung zuläßt. Der Querschnitt der Feder ist somit nach Art eines einfach gefiederten stumpfen Pfeiles ausgebildet.

Vorzugsweise ist der Querschnitt der Profilleiste symmetrisch gestaltet, so daß auf beiden Seiten Dichtlippen vorhanden sind.

Zur Gewährung eines guten Gleitverhaltens beim Schieben in der Nut sind die Flanken der Dichtlippen mit einem Gleitmaterial, z.B. Polytetrafluorethylen oder einem gleitfähigen Silikongummi, beschichtet.

Vorteilhaft ist basisseitig ein Hohlraum in dem Gummiprofil vorgesehen, in den eine Metalleiste zur Versteifung eingeschoben ist, die auch einen guten Halt für eine Verschraubung der Profilleiste wand-, boden- oder türseitig bietet.

Die Weite des Freiraumes zwischen den elastischen Dichtlippen und dem feststehenden Profilteil entspricht etwa der Lippendicke, und das feststehende Profilteil ist zu den Seiten, an denen die Lippen anschließen, gegenüber der Basisseite verjüngt ausgebildet.

Ist die Basis der Leiste auf dem Boden aufgesetzt, so hat die nach unten geneigte Anordnung der Dichlippen den Vorteil, daß die Freiräume eis- und schmutzfrei bleiben, so daß die Schiebeführungsfunktion stets gegeben ist.

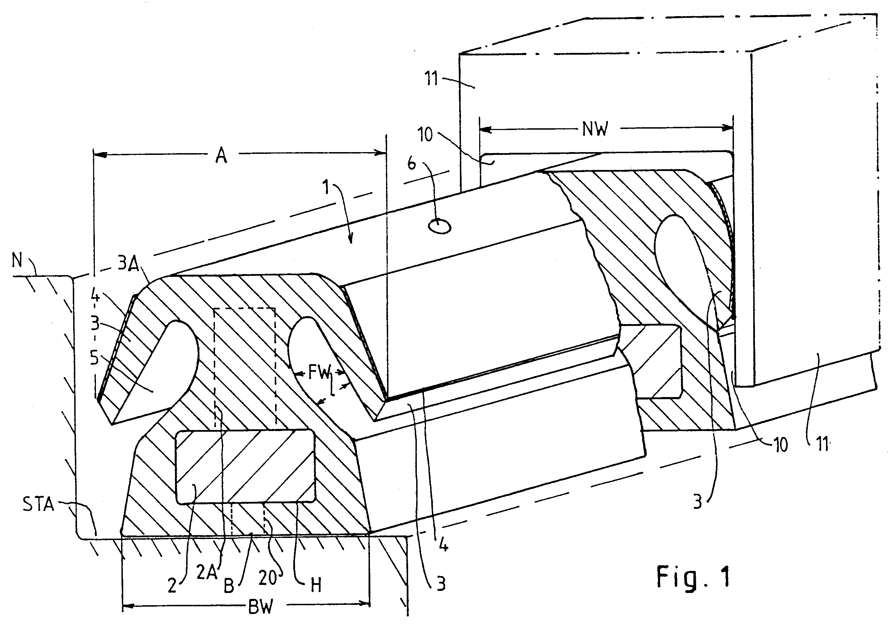

Eine vorteilhafte Ausführung ist in Figur 1 gezeigt.
- Fig. 1: zeigt eine vergrößerte Perspektive einer bodenseitigen Profilanordnung, endseitig geschnitten und im Mittenbereich ausgebrochen.

Die Figur 1 zeigt die aus elastischem Gummi bestehende Profilleiste (1), die in einem Stufenabsatz (STA) bodenseitig mit ihrer Basis (B) befestigt. Im Basisbereich der Profilleiste (1) befindet sich ein flacher rechteckiger Hohlraum (H), in den eine Versteifungsleiste (2) aus Leichtmetall eingelegt ist, die der Stabilität und einer guten Schraubbefestigung dient. Statt einer massiven Metalleiste, einer Holz- oder Kunststoffleiste, kann dort auch ein 4-kant-Rohr aus Metall eingesetzt sein.

Von der Basis (B) aus ist der Profilquerschnitt verjüngt gestaltet, und von oben schräg nach unten gerichtet sind daran beidseitig Dichtlippen (3) mit einem gerundeten Übergang (3A) angeformt.

Die Dichtlippen (3) tragen an ihren äußeren Flanken eine elastische Gleitbeschichtung (4) aus PTFE. Die Lippen (3) sind zum freien Ende hin jeweils verjüngt, und sie weisen eine Dicke von etwa 1,5 - 3,5 mm, insbesondere 2 - 3 mm, auf.

Zwischen den Dichtlippen (3) und dem inneren Profilkörper befinden sich konkav gerundete Freiräume (5), in die die Dichtlippen (3) zurückgedrängt sind, wenn die Nut (10) einer Tür (11) die federartige Dichtleiste (1) umgreift, wie die rechte Figurenseite zeigt.

Die freien Enden der Dichtlippen (3) überragen die Basisweite der Profilleiste, und der Abstand (A) der freien Enden voneinander ist größer als die Nutweite (NW), die annähern der Basisweite (BW) entspricht. Durch diese Bemessungen ist sichergestellt, daß die Dichtlippen elastisch formschlüssig an den seitlichen Nutwandungen anligen und sowohl die Dichtheit als auch die Verschieblichkeit der Tür (11) zu der Profilleiste (1) besteht.

Die Freiraumweiten (FW) sind so groß, daß die durch die Nutwandungen elastisch zusammengebogenen Dichtlippen (3) dort Aufnahme finden.

Die Profilleiste läßt sich auch einseitig mit einer Dichtlippe ausgestalten. Auch läßt sie sich etwa um die Höhe der flach liegenden Versteifungsleiste (2) niedriger, d.h. ohne Sockelbereich, ausbilden, wobei ggf. eine Versteifungseinlage (2A), die gestrichelt dargestellt ist, hochkant im Mittelbereich benachbart zu den Dichtlippen (3) angeordnet ist.

Die Ausführung der Profilleiste in Gummi ist besonders für die Anwendung im Fahrzeugbereich vorteilhaft, da Gummi bei allen Temperaturen elastisch bleibt.

Die Nut die in der Figur untenseitig an der Tür oder einem Fenster angeordnet ist, läßt sich auch wand- oder bodenseitig, z. B. an einem Tür- oder Fensterrahmen, anordnen, wobei die Profilleiste im Tür- oder Fensterrahmen vorzugsweise integriet ist.

Die Versteifungsleiste (2) läßt sich auch als ein intergraler Bestandteil eines Rahmens, an einem Steg (20), der strichpunktiert gezeichnet ist, gehalten, ausbilden, so daß die Gummiprofilleiste auf ihrer Basisseite die Versteifungsleiste (2) bis zum Haltesteg (20) hin umgreift.

Die Anordnung der Profilleiste (1) in einem kleinem Absatz (STA) einer Stufenkante ist so gewählt, daß die Oberseite der Profilleiste mit dem Stufenniveau (N) abschließt und die Tür (11) mit ihrem Nutbereich (10) den Stufenabsatz (STA) etwa ausfüllt. Auf diese Weise weist die Stufe keine Stolperkante auf, und das Gummi gibt eine hohe Rutschsicherheit. Weiterhin hat die Tür (11) einen ersten Halt an der versteiften Profilleiste (1) und bei einer Stoßbelastung im Falle eines Unfalles mit Seitenkrafteinwirkung einen zweiten Halt an der Rückseite der Stufenausnehmung (STA). Die Vorderkante der freien Dichtlippe der Profilleiste ist etwa bündig zu der Treppenstufenfrontseite, die an den Stufenabsatz (STA) anschließt. Die Außenabmessungen der dargestellten Ausführung der Dichtleiste betragen etwa 20 mm mal 20 mm.

Die Fahrzeugtür (11) ist in bekannter Weise obenseitig verschieblich auf einer Rollenführung aufgehängt, so daß die bodenseitige Profilleiste (1) nur einen Seitenhalt und eine Längsführung zu geben braucht. Es ist jedoch auch möglich, auf der stumpfen Oberseite der Profilleiste (1) stirnseitig eine Rollenführung laufen zu lassen, wenn dies ein Erfordernis ist. Zur Befestigung der Profilleiste (1) sind in dem Gummi Durchgangsbohrungen (6) vorgesehen, in denen Schrauben eingesetzt sind, die an der Oberseite der Versteifungsleiste (2, 2A), die eine engere Bohrung aufweist, einen Halt findet. Auch kann ein Gewinde in der Versteifungsleiste eingeschnitten sein, wo die Verschraubung einen Halt findet. In diesem Fall läßt sich auch eine verdeckte Veschraubung von der Basisseite her vornehmen. Eine Bohrung (6) ist dann auf der Oberseite der Profilleiste (1) nicht sichtbar. Dies hat auch den Vorteil, daß die Rollbahn für eine Rollenlagerung völlig glatt ist, wenn diese vorgesehen ist.

## Patentansprüche

1. Führungsprofilleiste (1), auf der ein Nutprofil (10) formschlüssig verschieblich gehalten ist, insbesondere als Schiebeführung einer Schiebetür oder eines Schiebefensters in einem Fahrzeug, dadurch gekennzeichnet, daß die Führungsprofilleiste (1) aus elastischem Gummi besteht und sich von einer befestigungsseitigen Basis (B) aus verjüngt erstreckt und daß sich von dem verjüngten Bereich aus sich seitlich schräg zurück gerichtet mindestens eine Dichtlippe (3) mit einem dazwischenliegenden Freiraum (5) erstreckt, so daß sie in dem Nutprofil (10) elastisch kraftschlüssig anliegt.

2. Führungsprofilleiste nach Anspruch 1, dadurch gekennzeichnet, daß die Dichtlippe (3) flankenseitig eine Gleitbeschichtung (4) trägt.

3. Führungsprofilleiste nach Anspruch 2, dadurch gekennzeichnet, daß die Gleitbeschichtung (4) aus Polytetrafluorethylen oder Silikongummi besteht.

4. Führungsprofilleiste nach einem der vorstehenden Ansprüche, dadurch gekennzeichnet, daß die Dichtlippe (3) abgerundet an dem verjüngten Bereich angeformt ist.

5. Führungsprofilleiste nach einem der vorstehenden Anprüche, dadurch gekennzeichnet, daß die Dichtlippe (3) zu ihrem freien Ende hin verjüngt ausgebildet ist.

6. Führungsprofilleiste nach Anspruch 5, dadurch gekennzeichnet, daß die Dichtlippe (3) eine Dicke von 3,5 - 1,5 mm aufweist.

7. Führungsprofilleiste nach einem der vorstehenden Ansprüche, dadurch gekennzeichnet, daß der Freiraum (5) eine Freiraumweite (FW) aufweist, die mindestens so groß ist, wie die Dichtlippe (3) die Basis (B) seitlich überragt.

8. Führungsprofilleiste nach Anspruch 7, dadurch gekennzeichnet, daß die Freiraumweite (FW) etwa der Dicke der Dichtlippe (3) entspricht.

9. Führungsprofilleiste nach einem der vorstehenden Ansprüche, dadurch gekennzeichnet, daß diese einen längslaufenden Hohlraum (H) aufweist, in den eine Versteifungsleiste (2, 2A) eingesetzt ist.

10. Führungsprofilleiste nach Anspruch 9, dadurch gekennzeichnet, daß der Hohlraum (H) einen flachen rechteckigen Querschnitt hat und die Versteifungsleiste (2, 2A) massiv ist oder ein Metallrohr ist.

11. Führungsprofilleiste nach Anspruch 8, dadurch gekennzeichnet, daß die Versteifungsleiste (2) zur Basis (B) hin mit dem angrenzenden Wand- oder Rahmenbereich verschraubt oder vernietet ist oder an diesem mit einem Haltesteg (20) gehalten ist, wobei das Profilgummi basisseitig die Versteifungsleiste (2) bis zum Haltesteg (20) hin beidseitig umgreift.

12. Führungsprofilleiste (1) nach einem der vorstehenden Ansprüche, dadurch gekennzeichnet, daß dies in einen Stufenabsatz (STA) einer Einstiegsstufe eines Fahrzeuges eingesetzt ist, so daß diese bündig mit einem Niveau (N) der angrenzenden Stufe ist und der Stufenabsatz (STA) mit einer an ihn nach unten anschließenden Stufenfrontseite mit einer äußeren Dichtlippenkante der Profilleiste (1) etwa bündig liegt.

13. Führungsprofilleiste nach einem der vorstehenden Ansprüche, dadurch gekennzeichnet, daß diese senkrecht zur Basis (B) mittig Befestigungsbohrungen (6) aufweist, die einen größeren Durchnmesser haben als jeweils in der Versteifungsleiste (2, 2A) koaxial eingebrachte Befestigungsbohrungen aufweisen.

14. Führungsprofilleiste, nach Anspruch 13, dadurch gekennzeichnet, daß die Befestigungsbohrung basisseitig bis zur Versteifungsleiste (2, 2A) eingebracht ist und die Bohrung in der Versteifungsleiste (2,2A) eine Gewindebohrung ist.

15. Führungsprofilleiste nach einem der vorstehenden Ansprüche, dadurch gekennzeichnet, daß stirnseitig auf ihr in der Nut (10) Stützrollen angeordnet sind.
